# FASCICULE DE BREVET EUROPEEN

(11) **EP 3 554 887 B1**
(45) Date de publication et mention de la délivrance du brevet: **23.09.2020**
(21) Numéro de dépôt: 17816801.9
(22) Date de dépôt: 14.12.2017
(51) Int. Cl.: H02J 7/02, H02M 7/217

(54) **PROCÉDÉ DE COMMANDE D'UN DISPOSITIF DE CHARGE EMBARQUÉ SUR UN VÉHICULE ÉLECTRIQUE OU HYBRIDE**
STEUERUNGSVERFAHREN EINER IN EINEM ELEKTRISCHEN ODER HYBRIDEN FAHRZEUG EINGEBETTETEN LADEVORRICHTUNG
CONTROL METHOD FOR A CHARGE DEVICE EMBEDDED ON AN ELECTRICAL OR HYBRID VEHICLE

(30) Priorité: 14.12.2016 FR 1662398
(43) Date de publication de la demande: 23.10.2019
(73) Titulaire: Renault S.A.S., 92100 Boulogne-Billancourt (FR); Nissan Motor Co., Ltd., Yokohama-shi, Kanagawa 221-0023 (JP)
(72) Inventeur: VELA GARCIA, Ruben, 78000 Versailles (FR)
(74) Mandataire: Rougemont, Bernard
(86) Numéro de dépôt international: PCT/EP2017/082874
(87) Numéro de publication internationale: WO 2018/109103

(56) Documents cités:
- CN-U- 205 407 374
- WANG HAOYU ET AL: "Transportation Electrification: Conductive charging of electrified vehicles", IEEE ELECTRIFICATION MAGAZINE, IEEE, USA, vol. 1, no. 2, 1 décembre 2013 (2013-12-01), pages 46-58, XP011541179, ISSN: 2325-5897, DOI: 10.1109/MELE.2013.2294238 [extrait le 2014-02-26]
- SERKAN DUSMEZ ET AL: "Comprehensive analysis of high quality power converters for level 3 off-board chargers", 2011 IEEE VEHICLE POWER AND PROPULSION CONFERENCE (VPPC 2011) : CHICAGO, ILLINOIS, USA, 6 - 9 SEPTEMBER 2011, IEEE, PISCATAWAY, NJ, 6 septembre 2011 (2011-09-06), pages 1-10, XP031974886, DOI: 10.1109/VPPC.2011.6043096 ISBN: 978-1-61284-248-6
- CHRISTEN DANIEL ET AL: "Ultra-fast charging station for electric vehicles with integrated split grid storage", 2015 17TH EUROPEAN CONFERENCE ON POWER ELECTRONICS AND APPLICATIONS (EPE'15 ECCE-EUROPE), JOINTLY OWNED BY EPE ASSOCIATION AND IEEE PELS, 8 septembre 2015 (2015-09-08), pages 1-11, XP032800324, DOI: 10.1109/EPE.2015.7309322
- KIM HO-SUNG ET AL: "The High-Efficiency Isolated AC-DC Converter Using the Three-Phase Interleaved LLC Resonant Converter Employing the Y-Connected Recti", IEEE TRANSACTIONS ON POWER ELECTRONICS, INSTITUTE OF ELECTRICAL AND ELECTRONICS ENGINEERS, USA, vol. 29, no. 8, 1 août 2014 (2014-08-01), pages 4017-4028, XP011544088, ISSN: 0885-8993, DOI: 10.1109/TPEL.2013.2290999 [extrait le 2014-03-26]

## Description

La présente invention concerne un procédé de commande d'un dispositif de charge à entrée triphasée ou monophasée, comprenant un convertisseur AC-DC (courant alternatif - courant continu) isolé. Un tel dispositif de charge est particulièrement adapté pour une utilisation en tant que dispositif embarqué dans un véhicule automobile électrique ou hybride.

Ces véhicules sont équipés de batteries électriques haute tension et comprennent généralement des chargeurs embarqués, c'est-à-dire des dispositifs de charge des batteries électriques qui sont montés directement sur les véhicules. La fonction principale de ces dispositifs de charge est la recharge des batteries à partir de l'électricité disponible sur le réseau de distribution électrique. Ils assurent donc une conversion d'un courant alternatif en courant continu. Les critères recherchés pour les dispositifs de charge, et tout particulièrement pour les chargeurs embarqués, sont un rendement élevé, un faible encombrement, une isolation galvanique, une bonne fiabilité, une sécurité de fonctionnement, une faible émission de perturbations électromagnétiques, et un faible taux d'harmoniques sur le courant d'entrée.

On connaît des dispositifs de charge à entrée triphasée, c'est-à-dire qui sont capables de charger la batterie à partir d'un réseau d'alimentation électrique triphasé et des dispositifs de charge à entrée monophasée, c'est-à-dire qui sont capables de charger la batterie à partir d'un réseau d'alimentation électrique monophasé. Les dispositifs de charge à entrée triphasée présentent une puissance de charge supérieure relativement aux dispositifs de charge à entrée monophasée, avec une puissance maximale de 22kW. Pour la connexion sur un réseau monophasé, plusieurs niveaux de puissance de charge peuvent être demandés, par exemple 7 kW, 15kW et 22kW.

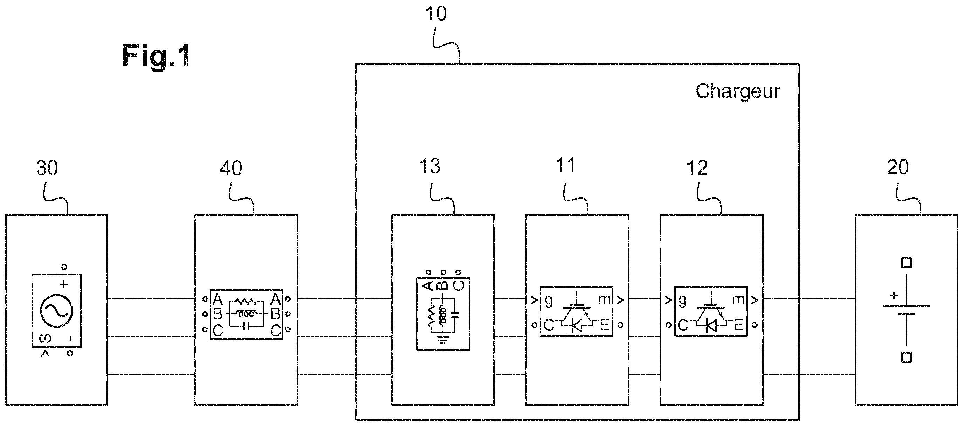

La figure 1 illustre une topologie connue d'un dispositif de charge 10 isolé, embarqué sur un véhicule électrique ou hybride pour la recharge de la batterie haute tension 20 du véhicule à partir d'un réseau d'alimentation électrique 30 auquel le dispositif de charge embarqué 10 est connecté par l'intermédiaire de l'impédance de ligne 40 du réseau.

Afin de mettre en œuvre la fonction de conversion AC-DC avec isolation galvanique, il est connu d'utiliser un dispositif de charge 10 comprenant un premier étage convertisseur AC-DC, qui comporte un circuit correcteur de facteur de puissance 11 (PFC, pour « Power factor Correction ») afin de limiter les harmoniques de courant d'entrée et un deuxième étage convertisseur DC-DC (courant continu - courant continu) 12, pour assurer la régulation de la charge et également pour assurer la fonction d'isolation pour la sécurité d'utilisation. Un filtre d'entrée 13 est classiquement intégré en entrée du dispositif de charge embarqué 10, en amont du circuit PFC 11 par rapport au réseau électrique 30.

Le circuit PFC 11 est géré par un contrôleur intégré (non représenté), qui analyse et corrige en temps réel l'allure du courant par rapport à la tension. Il en déduit les erreurs de forme par comparaison avec la sinusoïde redressée de la tension et il les corrige en contrôlant la quantité d'énergie grâce à un découpage haute fréquence et un stockage d'énergie dans une inductance. Son rôle est plus précisément d'obtenir un courant non déphasé et le plus sinusoïdal possible en entrée de l'alimentation du chargeur.

Pour le circuit PFC, il est possible de mettre en œuvre un redresseur triphasé trois nivaux à trois interrupteurs, communément connu sous le nom de redresseur triphasé de Vienne. Le choix de cette topologie est en effet particulièrement avantageux du point de vue des performances pour la correction de facteur de puissance.

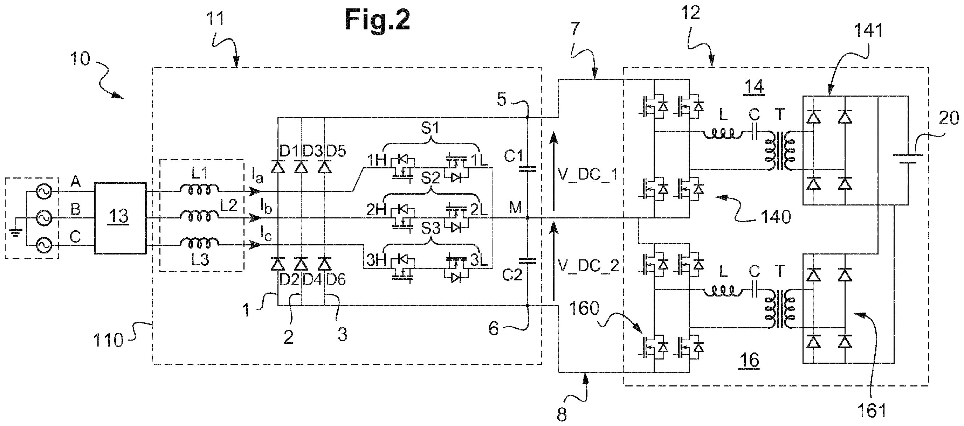

La figure 2 illustre la topologie du dispositif de charge à entrée triphasée composé de l'étage convertisseur PFC 11 du type redresseur triphasé de Vienne 110, lequel présente en sortie deux bus continu d'alimentation de puissance 7 et 8, comprenant chacun une ligne d'alimentation positive et une ligne d'alimentation négative et sur chacun desquels est connecté un circuit DC-DC respectivement 14, 16, qui composent l'étage convertisseur DC-DC 12 de la figure 1. Chaque circuit DC-DC 14, 16 est un convertisseur LLC résonant comprenant un premier ensemble d'interrupteurs, tels que des transistors MOS, monté en pont complet, respectivement 140, 160, connecté en entrée à l'un des deux bus continu d'alimentation de puissance 7, 8 et en sortie, en série, à un circuit résonnant L, C et au primaire d'un transformateur T, le secondaire du transformateur étant relié à un deuxième ensemble d'interrupteurs en pont complet, respectivement 141, 161, ce dernier étant relié à la batterie 20, éventuellement par l'intermédiaire d'un filtre de sortie 21.

L'étage convertisseur PFC 11 du type redresseur triphasé de Vienne 110 comprend trois connexions de phase entrantes parallèles A, B, C couplées chacune à une phase d'un réseau d'alimentation électrique triphasé, et reliée chacune à une paire d'interrupteurs S1, S2, S3 formant un bras de commutation du redresseur triphasé de Vienne par l'intermédiaire d'une bobine d'inductance en série L1, L2, L3. Un filtre d'entrée 13 est intégré en amont des inductances L1, L2, L3 sur chaque phase.

Chaque paire d'interrupteurs S1, S2, S3 comprend un montage série constitué d'un premier interrupteur correspondant 1H, 2H, 3H, qui est piloté quand un courant d'entrée correspondant Ia, Ib, Ic est positif, et d'un second interrupteur correspondant 1L, 2L, 3L qui est piloté quand le courant d'entrée correspondant est négatif. Les interrupteurs sont formés par des composants semi-conducteurs commandés à la fermeture et à l'ouverture, tel que par exemple des transistors MOS (acronyme anglais pour « Metal Oxide Semiconductor »), connectés en antiparallèle avec une diode. Les interrupteurs 1H sont également nommés interrupteurs haut et les interrupteurs 1L, interrupteurs bas.

Le redresseur triphasé de Vienne comprend aussi trois branches parallèles 1, 2 et 3, comportant chacune deux diodes D1 et D2, D3 et D4 et D5 et D6, qui forment un pont triphasé à six diodes permettant de redresser le courant et la tension prélevés à partir d'un réseau d'alimentation électrique triphasé. Chaque entrée du redresseur triphasé de Vienne est connectée, par une connexion entrante parallèle respective, à un point de connexion situé entre deux diodes d'une même branche 1, 2 et 3.

Les deux extrémités communes des branches 1, 2 et 3 constituent deux bornes de sorties 5 et 6, respectivement positive et négative, du redresseur triphasé de Vienne, qui sont destinées à être couplées au convertisseur DC-DC 12.

Les bras de commutation S1, S2, S3 de chaque phase sont par ailleurs connectés chacun respectivement entre le point de connexion situé entre les deux diodes des première, deuxième et troisième branches 1, 2 et 3 et un point milieu M des tensions de sortie V_DC_1 et V_DC_2 du redresseur triphasé de Vienne, correspondant respectivement à la tension sur le condensateur de sortie C1 entre la borne de sortie positive 5 du redresseur triphasé et le point milieu M et à la tension sur le condensateur de sortie C2 entre le point milieu M et une borne de sortie négative 6 du redresseur triphasé.

L'utilisation de la topologie résonante série-parallèle LLC (acronyme faisant référence à l'emploi d'un circuit comprenant l'association de deux inductances notées chacune L et d'une capacité notée C) est appliquée dans le convertisseur DC-DC 12, comme expliqué ci-dessus, et permet de faire varier le gain en tension du circuit résonant entre la tension d'entrée, soit la tension sur les deux bus continu d'alimentation de puissance 7, 8 entre les étages 11 et 12, et la tension de sortie (tension de batterie 20). En effet, lorsque l'on recharge la batterie 20, la tension de batterie est imposée et varie en fonction de son état de charge, cela nécessite en temps réel que l'étage convertisseur DC-DC 12 régule la puissance envoyée à la charge.

Pour ce faire, l'étage convertisseur DC-DC 12 adapte son gain pour permettre de convertir la tension d'entrée, sur le bus continu d'alimentation, vers la tension de batterie. Plus précisément, la variation de la fréquence de commutation des interrupteurs du pont complet respectivement 140, 160 associé au primaire de chacun des circuits DC-DC respectivement 14 et 16 de l'étage redresseur 12 permet de faire varier le gain en tension du circuit résonant.

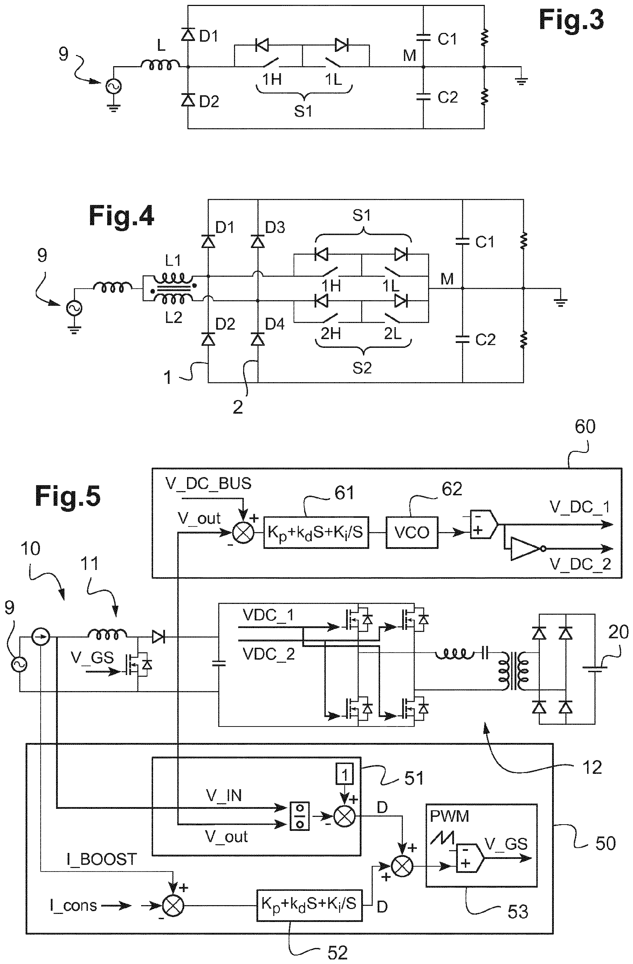

Comme illustré à la figure 3, pour la connexion à un réseau d'entrée monophasé 9, il est connu d'utiliser une branche indépendante du circuit redresseur d'entrée PFC 11, par exemple la branche 1, comme un chargeur monophasé avec doubleur de tension, à condition d'avoir un retour à la terre du point milieu capacitif M. Comme illustré à la figure 4, on connaît également une configuration de connexion à un réseau monophasé 9 en utilisant deux branches du circuit redresseur d'entrée PFC 11, à condition toujours d'avoir un retour du point milieu M à la terre.

Pour un dispositif de charge 10 du type précité à deux niveaux, c'est-à-dire avec l'étage redresseur d'entrée 11 connecté au réseau, assurant la fonction de correction de facteur de puissance PFC et l'étage convertisseur DC-DC 12, permettant l'isolation galvanique de la batterie 20, on utilise deux types de régulation.

La régulation mise en œuvre par l'étage redresseur d'entrée 11 connecté au réseau est destinée à assurer une forme sinusoïdale au courant d'entrée et une régulation de la tension sur le bus continu d'alimentation. Pour ce faire, on utilise classiquement une boucle de tension externe lente (avec une bande passante proche de la fréquence réseau) et une boucle de courant rapide (avec une bande passante proche de la fréquence de découpage du système). Le découplage entre les deux boucles se fait avec une forte valeur capacitive mise en place entre l'étage redresseur PFC en entrée et l'étage convertisseur DC-DC. Un exemple d'un tel convertisseur utilisé pour le chargement d'une batterie peut être trouvé dans le document CN 205 407 374.

Or, la solution de l'état de l'art, basée sur l'envoi d'un courant constant à l'étage convertisseur DC-DC, est une forte contrainte pour le dispositif de charge en monophasé.

En mode monophasé, le courant envoyé par l'étage redresseur PFC à l'étage convertisseur DC-DC est le découpage d'un courant sinusoïdal redressé. Ce courant possède deux composantes en fréquence bien définies, à savoir une première composante proportionnelle à la fréquence de découpage du système (par exemple proche de la centaine de kHz) et une deuxième composante proportionnelle à la deuxième harmonique de la tension réseau (100Hz-120Hz).

Cette deuxième composante basse fréquence est très contraignante pour les condensateurs des deux bus continu d'alimentation en sortie de l'étage redresseur PFC, et oblige à connecter en parallèle un grand nombre de condensateurs, avec comme conséquence que la valeur capacitive est beaucoup plus importante que celle dont on aurait besoin si on ne devait que se soucier du découplage entre les deux boucles de régulation. En outre, un souci d'optimisation des coûts implique de s'orienter vers des technologies de condensateur type chimique, qui sont moins immunes aux perturbations de tension réseau que d'autres types de technologies (par exemple de type condensateur film, céramique).

Aussi, il existe un besoin pour une stratégie de régulation optimisée pour un dispositif de charge présentant la topologie décrite ci-dessus, lorsqu'il est alimenté par un réseau monophasé et qui permette en particulier de réduire la valeurs des condensateurs de bus continu d'alimentation entre l'étage redresseur PFC et l'étage convertisseur DC-DC.

Conformément à l'invention, ce but est atteint par un procédé de commande d'un dispositif de charge d'une batterie de véhicule automobile, le dispositif de charge comprenant un étage redresseur assurant une fonction de correction de facteur de puissance, comportant trois connexion de phases aptes à être connectées en entrée à un réseau d'alimentation électrique monophasé ou triphasé chacune par l'intermédiaire d'une bobine d'inductance en série, et un étage convertisseur continu-continu relié entre l'étage redresseur et la batterie, l'étage redresseur étant un redresseur triphasé de Vienne comprenant un pont à diodes triphasé et trois bras de commutation intégrés au pont à diodes, comprenant chacun un montage en série d'un interrupteur haut apte à être piloté quand le courant du réseau est positif et d'un interrupteur bas apte à être piloté quand le courant du réseau est négatif, les bras de commutation étant interconnectés en un point milieu auquel sont reliés un premier et un deuxième condensateurs de bus continu d'alimentation en sortie de l'étage redresseur, l'étage convertisseur continu-continu comprenant un premier et un deuxième convertisseurs résonant LLC connectés en entrée respectivement au premier et au deuxième condensateurs de bus continu d'alimentation par un premier et un deuxième bus continu d'alimentation et, en sortie, à la batterie, le procédé étant du type selon lequel on régule le courant en entrée du dispositif de charge au moyen du redresseur triphasé de Vienne, chaque bras de commutation étant piloté à l'aide de signaux de commande de modulation par largeur d'impulsion dont le rapport cyclique de commutation est déterminé en fonction de la régulation du courant en entrée, le procédé étant caractérisé en ce qu'on alimente le dispositif de charge en monophasé et on régule la tension des premier et deuxième condensateurs de bus continu d'alimentation de façon indépendante au moyen des premier et deuxième convertisseurs résonant LLC de façon à assurer une tension régulée fixe sur chacun des bus continu d'alimentation.

Ainsi, le redresseur triphasé de Vienne régule uniquement le courant d'entrée du dispositif de charge, tandis que l'étage convertisseur continu-continu régule les tensions intermédiaires fournies en sortie du redresseur triphasé de Vienne au niveau du point milieu. Ainsi, en mode de connexion monophasée, tout le courant prélevé par le redresseur triphasé de Vienne est envoyé à la batterie par l'étage convertisseur continu-continu. Le courant reçu par le convertisseur continu-continu n'est donc plus continu pour la charge monophasée et présente une forte composante alternative à 100 Hz. De ce fait, les fluctuations de courant à cette fréquence dans les condensateurs de bus continu d'alimentation sont diminuées et on peut réduire fortement la valeur de ces condensateurs, ce qui est particulièrement favorable en termes de coûts d'une part, et d'encombrement, d'autre part.

Avantageusement, dans un premier mode de connexion monophasée correspondant à un premier niveau de puissance de charge en monophasé parmi au moins trois niveaux de puissance de charge de faible à élevé, on connecte une première et une deuxième des trois connexions de phase du dispositif de charge respectivement à un fil de phase et de neutre du réseau électrique monophasé, la deuxième connexion de phase étant reliée au fil de neutre par un relai de connexion.

Dans ce premier mode de connexion, suivant un premier mode de réalisation, on maintient en permanence à l'état fermé les interrupteurs du bras de commutation correspondant à la deuxième connexion de phase du dispositif de charge reliée au fil de neutre, de façon à n'utiliser alternativement qu'un seul des deux convertisseurs résonant LLC pour la charge de la batterie selon le premier niveau de puissance de charge, en fonction du signe du courant d'entrée.

De préférence, à chaque alternance du signe du courant d'entrée, on coupe la commande du convertisseur résonant LLC non utilisé.

Dans ce premier mode de connexion, suivant un deuxième mode de réalisation, on fait commuter systématiquement les interrupteurs des bras de commutation correspondant aux première et deuxième connexions de phase du dispositif de charge reliées au réseau électrique monophasé en fonction du signe du courant d'entrée, de façon à utiliser conjointement les deux convertisseurs résonant LLC pour la charge de la batterie selon le premier niveau de puissance de charge.

Avantageusement, lors d'une alternance positive du courant d'entrée, on fait commuter ensemble l'interrupteur haut et l'interrupteur bas des bras de commutation correspondant respectivement aux première et deuxième connexions de phase du dispositif de charge et, lors d'une alternance négative du courant d'entrée, on fait commuter ensemble l'interrupteur bas et l'interrupteur haut des bras de commutation correspondant respectivement aux première et deuxième connexions de phase du dispositif de charge.

Avantageusement, dans un deuxième mode de connexion monophasée, correspondant à un deuxième niveau de puissance de charge en monophasé parmi au moins trois niveaux de puissance de charge de faible à élevé, on connecte une première et une deuxième des trois connexions de phase du dispositif de charge respectivement à un fil de phase et de neutre du réseau électrique monophasé, la deuxième connexion de phase étant reliée au fil de neutre par un premier relai de connexion et on connecte ensemble la première et la troisième connexion de phase par un deuxième relai de connexion.

Dans ce deuxième mode de connexion, suivant un premier mode de réalisation, on maintient à l'état systématiquement fermé les interrupteurs du bras de commutation correspondant à la deuxième connexion de phase du dispositif de charge reliée au fil de neutre, et on fait commuter systématiquement les interrupteurs des bras de commutation correspondant aux première et troisième connexions de phase du dispositif de charge reliées ensemble en fonction du signe du courant d'entrée, de façon à n'utiliser alternativement qu'un seul des deux convertisseurs résonant LLC pour la charge de la batterie selon le deuxième niveau de puissance de charge, en fonction du signe du courant d'entrée.

Avantageusement, lors d'une alternance positive du courant d'entrée, on fait commuter ensemble les interrupteurs haut des bras de commutation correspondant respectivement aux première et troisième connexions de phase reliées ensemble du dispositif de charge et, lors d'une alternance négative du courant d'entrée, on fait commuter ensemble les interrupteurs bas des bras de commutation correspondant respectivement aux première et troisième connexions de phase reliées ensemble du dispositif de charge.

Dans ce deuxième mode de connexion, suivant un deuxième mode de réalisation, on fait commuter systématiquement les interrupteurs des bras de commutation correspondant aux première, deuxième et troisième connexions de phase du dispositif de charge reliées au réseau électrique monophasé en fonction du signe du courant d'entrée, de façon à utiliser conjointement les deux convertisseurs résonant LLC pour la charge de la batterie selon le deuxième niveau de puissance de charge.

Avantageusement, dans un troisième mode de connexion monophasée, correspondant à un troisième niveau de puissance de charge en monophasé parmi au moins trois niveaux de puissance de charge de faible à élevé, on connecte une première des trois connexions de phase du dispositif de charge à un fil de phase du réseau électrique monophasé et la deuxième et la troisième connexions de phase du dispositif de charge audit fil de phase du réseau électrique monophasé par un relai de connexion respectif, le point milieu du redresseur triphasé de Vienne étant connecté à fil de neutre du réseau électrique monophasé.

Avantageusement, on n'utilise alternativement qu'un seul des deux convertisseurs résonant LLC pour la charge de la batterie selon le troisième niveau de puissance de charge en fonction du signe du courant d'entrée et on fait commuter systématiquement les interrupteurs des bras de commutation correspondant aux première, deuxième et troisième connexions de phase du dispositif de charge reliées ensemble en fonction du signe du courant d'entrée.

D'autres particularités et avantages de l'invention ressortiront à la lecture de la description faite ci-après d'un mode de réalisation particulier de l'invention, donné à titre indicatif mais non limitatif, en référence aux figures suivantes dans lesquelles :
- la figure 1 illustre de façon schématique une topologie connue d'un dispositif de charge de batterie destiné à être embarqué sur un véhicule automobile électrique ou hybride ;
- la figure 2 illustre de façon schématique un dispositif de charge à deux niveaux composé d'un redresseur triphasé de Vienne en entrée avec deux bus continu d'alimentation en sortie, sur chacun desquels est connecté un convertisseur continu-continu de type convertisseur résonant LLC, et sur lequel est mis en œuvre le procédé de commande selon l'invention ;
- la figure 3 illustre un premier exemple de configuration de connexion à un réseau monophasé du dispositif de charge de la figure 2 pour une utilisation en tant que chargeur monophasé ;
- la figure 4 illustre un premier exemple de configuration de connexion à un réseau monophasé du dispositif de charge de la figure 2 pour une utilisation en tant que chargeur monophasé ;
- la figure 5 illustre de façon schématique le principe de régulation pour la charge monophasée permettant de décliner différents modes de connexion monophasée à partir de la topologie de base triphasée illustrée à la figure 2 ;
- les figures 6 et 7 illustrent un premier mode de connexion monophasée du dispositif de charge illustré à la figure 2, correspondant à un premier niveau de puissance de charge demandé en monophasé, qui utilise les deux convertisseurs résonant DC-DC en alternance pour délivrer ledit premier niveau de puissance de charge demandé ;
- la figure 8 illustre une variante du premier mode de connexion monophasée du dispositif de charge, dans laquelle les deux convertisseurs résonant de l'étage convertisseur DC-DC sont utilisés en parallèle pour délivrer le premier niveau de puissance de charge demandé ;
- la figure 9 illustre un deuxième mode de connexion monophasée du dispositif de charge illustré à la figure 2, correspondant à un deuxième niveau de puissance de charge demandé en monophasé, supérieur au premier niveau ; et
- la figure 10 illustre un troisième mode de connexion monophasée du dispositif de charge illustré à la figure 2, correspondant à un troisième niveau de puissance de charge demandé en monophasé, supérieur aux premier et deuxième niveaux.

En référence à la figure 5, est illustré le principe de régulation en mode monophasé du dispositif de charge 10 connecté à un réseau monophasé 9, avec un modèle de régulation simple pour chacun des blocs, respectivement l'étage redresseur PFC 11 et l'étage convertisseur DC-DC 12.

La régulation en mode monophasé de l'étage redresseur PFC 11 consiste à réguler le courant d'entrée et aussi à imposer une forme sinusoïdale à ce courant. Un module 50 de contrôle de la régulation de l'étage redresseur PFC 11 est programmé pour assurer un asservissement du courant en entrée de l'étage redresseur triphasé. Cet asservissement mis en œuvre par le module 50 de contrôle comprend l'application d'une boucle de régulation pour le courant en entrée du redresseur PFC, ayant une variable de commande et une consigne, et où la variable de commande de la boucle est basée sur un écart de rapport cyclique par rapport à une valeur calculée en boucle ouverte à partir des tensions mesurées en entrée et en sortie du redresseur PFC. Pour ce faire, un estimateur 51 est adapté pour calculer la valeur du rapport cyclique théorique D à partir des tensions en entrée V_IN et en sortie V_out du redresseur PFC. L'écart par rapport à cette valeur théorique D est calculée via l'erreur entre la mesure du courant en entrée I_BOOST et un courant de consigne I_cons, utilisée par un régulateur PID 52 pour calculer une nouvelle valeur de rapport cyclique, où kp, Ki et Kd sont les gains de proportionnalité, d'intégration et de dérivation du régulateur PID 52. On suppose que la tension du bus continu d'alimentation en sortie de l'étage redresseur PFC est constante, puisqu'elle est asservie par l'étage redresseur DC-DC.

L'écart du rapport cyclique calculé par rapport à la valeur théorique est ensuite fourni à un bloc 53 de génération des signaux de commande PWM (acronyme anglo-saxon pour « Pulse Width Modulation ») par comparaison à une rampe notamment, permettant de générer les différents signaux de commande V_GS qui sont utilisés pour commander les interrupteurs des bras de commutation du redresseur PFC, en fonction des différents modes de charge en monophasé qui seront détaillés plus loin.

On utilise une telle boucle de régulation pour chaque phase d'entrée du redresseur PFC.

S'agissant l'étage convertisseur DC-DC 12, on a vu ci-dessus en référence à la figure 2, que la topologie retenue est celle d'un convertisseur résonant LLC, dont la fonction est d'adapter la tension entre le bus continu d'alimentation en sortie du redresseur PFC 11 et la batterie 20. En particulier, la variation, en cours de charge, de la fréquence de commutation des transistors du pont complet connecté au primaire du convertisseur permet de faire varier la fonction de transfert du circuit résonant. Classiquement, le convertisseur DC-DC est utilisé pour réguler la tension de sortie envoyée à la batterie. Le principe de régulation ici mis en œuvre consiste à réguler la tension sur les deux bus continu d'alimentation en entrée du convertisseur DC-DC, respectivement V_DC_1 et V_DC_2, au moyen du convertisseur DC-DC. Ainsi, c'est le convertisseur DC-DC qui régule sa propre tension d'entrée, correspondant à la tension de sortie du redresseur PFC.

Un module 60 de contrôle de la régulation de l'étage convertisseur 12 est programmé pour assurer cette régulation. Chaque convertisseur résonant LLC constituant le convertisseur DC-DC 12 dans la topologie retenue aura sa propre boucle de régulation pour réguler la tension de façon indépendante sur le bus continu d'alimentation auquel il est relié. Plus précisément, l'erreur de tension entre la mesure de la tension du bus continu d'alimentation V_DC_BUS et la tension V_out souhaitée en sortie du redresseur PFC est fournie à un régulateur PID 61 du module de contrôle 60, qui va calculer une nouvelle valeur de tension, laquelle est fournie à son tour à un oscillateur commandé en tension 62, permettant de définir la fréquence de commutation nécessaire à imposer au convertisseur LLC résonant pour assurer une tension régulée fixe sur chacun des bus continu d'alimentation, respectivement V_DC_1 et V_DC_2. Les deux diagonales d'interrupteurs du pont complet d'interrupteurs au primaire du convertisseur résonant LLC sont donc commutées avec un rapport cyclique fixe (50%) et une fréquence définie par la boucle de régulation comme indiqué ci-dessus.

Le module de contrôle 60 est donc programmé pour assurer automatiquement une régulation de la tension de bus continu d'alimentation à une tension constante au moyen du convertisseur DC-DC lors de la charge de la batterie, que ce soit en mode de connexion triphasé ou en mode de connexion monophasé du dispositif de charge.

On va maintenant décliner différents modes de connexion monophasée du dispositif de charge, qui sont tous basés sur la même topologie de base triphasée du dispositif de charge telle que décrite en référence à la figure 2 et qui permettent avantageusement de développer un dispositif de charge susceptible de s'adapter à différents niveaux de puissance de charge demandés en monophasé, en particulier 7kW, 15 kW et 22kW. Ceci est possible sans modification de la configuration matérielle globale du dispositif de charge, hormis une adaptation des composants utilisés à la puissance à passer, seule une adaptation de la commande des bras de commutation du redresseur PFC étant nécessaire pour permettre au dispositif de charge de s'adapter aux différents modes de connexion en monophasé du dispositif de charge.

La puissance de charge maximale en triphasé est de 22 kW. En faisant une analogie par bras du redresseur PFC 11, on peut dire que chaque bras du redresseur PFC peut passer une puissance de 22kW/3, soit environ 7 kW. En ce qui concerne les deux convertisseurs résonant LLC 14, 16, ils sont dimensionnés de sorte que la puissance nominale de chacun d'eux est de l'ordre de 11 kW. L'objectif est donc de décliner différents modes de connexion en monophasé permettant de s'adapter à plusieurs niveaux de puissance demandés, en particulier 7 kW, 15 kW et 22 kW, en minimisant les modifications à apporter au dispositif de charge.

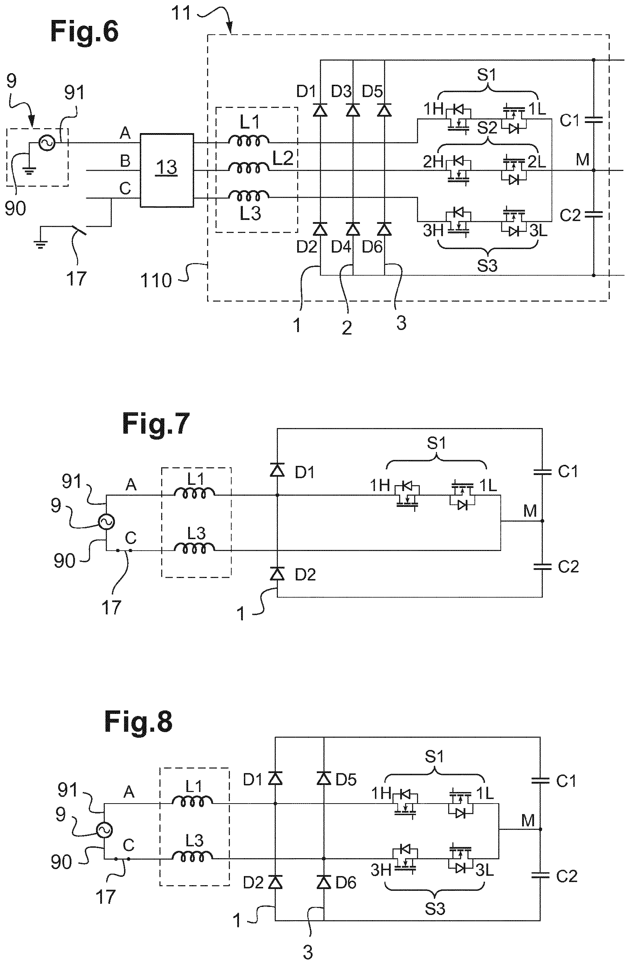

La figure 6 décrit un premier mode de connexion monophasée du dispositif de charge, permettant de délivrer 7 kW, en monophasé, correspondant à un premier niveau de puissance de charge, dit faible. En effet, chacun des bras du redresseur PFC étant dimensionné pour cette puissance nominale, on peut arriver à délivrer 7 kW en monophasé sans modifier la topologie de puissance globale du dispositif de charge. Il convient seulement d'ajouter un relai de connexion 17 entre le fil de neutre 90 du réseau monophasé 9 et l'une des connexions de phase du dispositif de charge, pour adapter ce dernier au réseau monophasé, tandis que le reste du dispositif de charge reste inchangé. Ainsi, dans ce premier mode de connexion monophasée, on connecte la connexion de phase A en entrée du dispositif de charge au fil de phase 91 du réseau électrique monophasé 9 et, par exemple, la connexion de phase C au fil de neutre 90 du réseau électrique monophasé 9, par l'intermédiaire du relai de connexion 17. La connexion de phase B associée au deuxième bras de commutation du redresseur PFC n'est quant à elle pas utilisée.

A faible puissance, l'intérêt est de travailler avec un seul convertisseur résonant DC-DC à la fois en sortie du redresseur PFC pour minimiser la consommation de puissance réactive du système. Aussi, on maintient en permanence à l'état fermé les interrupteurs 3H et 3L du bras de commutation S3 correspondant à la connexion de phase C reliée au fil de neutre du réseau monophasé, de façon à envoyer l'énergie sur un seul convertisseur résonant LLC d'une façon alternative, suivant le signe de la tension d'entrée. La figure 7 illustre cette configuration du redresseur PFC connecté au réseau monophasé avec les deux interrupteurs du bras relié au fil de neutre du réseau fermé en permanence.

Dans cette configuration, pour une tension d'entrée positive, l'interrupteur haut 1H du bras de commutation S1 du redresseur PFC relié au fil de phase du réseau est commandé en commutation par le signal de commande fourni par le module 50 de contrôle de l'étage redresseur PFC 11, tandis que l'interrupteur bas 1L est commandé à l'état de repos. Les interrupteurs haut et bas 3H et 3L du bras de commutation relié au fil de neutre étant maintenus en permanence à l'état fermé, le courant est envoyé au convertisseur résonant LLC de l'étage convertisseur DC-DC dont l'entrée est connectée au condensateur de bus C1.

Lorsque la tension d'entrée du dispositif de charge est négative, l'interrupteur piloté en commutation du bras de commutation S1 est l'interrupteur bas 1L, tandis que l'interrupteur haut 1H est commandé à l'état de repos. Les interrupteurs haut et bas 3H et 3L du bras de commutation relié au fil de neutre étant toujours maintenus en permanence à l'état fermé, le courant est cette fois envoyé au convertisseur résonant LLC de l'étage convertisseur DC-DC dont l'entrée est connectée au condensateur de bus C2.

La régulation de chacun des deux bus continu d'alimentation est faite en alternance par le convertisseur résonant LLC associé à ce bus. Le convertisseur résonant LLC 14 de l'étage convertisseur DC-DC 12 relié au condensateur de bus C1 conduit pendant l'alternance positive de la tension d'entrée et le convertisseur résonant LLC 16 de l'étage convertisseur DC-DC 12 relié au condensateur de bus C2 conduit pendant l'alternance négative de la tension d'entrée.

La commande PWM du pont complet d'interrupteurs côté primaire du convertisseur résonant LLC qui n'est pas utilisé pendant chacune des alternances de la tension d'entrée est préférentiellement coupée de façon à diminuer la circulation de courant réactif dans le système et également pour diminuer les pertes.

La figure 8 illustre une deuxième stratégie de commande dans le cadre du premier mode de connexion monophasée décrit précédemment, qui vise toujours à délivrer le premier niveau de puissance de charge, soit 7 kW, mais en répartissant cette fois la puissance sur les deux convertisseurs résonant LLC de l'étage convertisseur DC-DC en sortie de l'étage redresseur PFC, de façon à optimiser les performances du système. Aussi, à la différence du cas précédent en référence aux figures 6 et 7, on envoie l'énergie aux deux convertisseurs résonant LLC de l'étage convertisseur DC-DC en même temps, qui sont dans ce cas utilisés en parallèle pour délivrer la puissance de charge de 7 kW.

La stratégie de commande permettant d'utiliser conjointement les deux convertisseurs résonant LLC pour délivrer la puissance de 7 kW en charge monophasée, consiste à faire commuter systématiquement les interrupteurs des bras de commutation S1 et S3 associés aux connexions de phase A et C reliées respectivement aux fils de phase et de neutre du réseau monophasé 9, suivant le signe du courant d'entrée.

Plus précisément, lors d'une alternance positive du courant d'entrée, le module 50 de contrôle de l'étage redresseur PFC 11 est adapté pour fournir des signaux de commande appropriés permettant de commander ensemble en commutation l'interrupteur haut 1H du bras de commutation S1 du redresseur PFC relié au fil de phase du réseau 9 et l'interrupteur bas 3L du bras de commutation S3 relié au fil de neutre du réseau 9, tandis que les interrupteurs bas 1L et haut 3H des bras de commutation S1 et S3 sont laissés en mode repos.

Lors d'une alternance négative du courant d'entrée, le module 50 de contrôle de l'étage redresseur PFC 11 est cette fois adapté pour fournir des signaux de commande appropriés permettant de commander ensemble en commutation l'interrupteur bas 1L du bras de commutation S1 relié au fil de phase du réseau 9 et l'interrupteur haut 3H du bras de commutation S3 relié au fil de neutre du réseau 9, tandis que les interrupteurs haut 1H et bas 3L des bras de commutation S1 et S3 sont laissés en mode repos.

En décalant les signaux de commande des bras de commutation S1 et S3 associés aux connexions de phase A et C, reliées respectivement aux fils de phase et de neutre du réseau monophasé 9, on réussit à avoir de l'entrelacement entres les deux phases, ce qui permet de doubler la fréquence vue par l'inductance du redresseur PFC sans changer la fréquence de découpage du système.

Le mode de régulation est inchangé. Chacune des boucles de régulation associée à chaque phase d'entrée du redresseur PFC, comme illustrée à la figure 5, est prévue pour réguler le courant d'entrée du dispositif de charge, en supposant que la tension en entrée prise sur chaque connexion de phase, respectivement A et C, correspond à la moitié de la tension délivrée par le réseau monophasée.

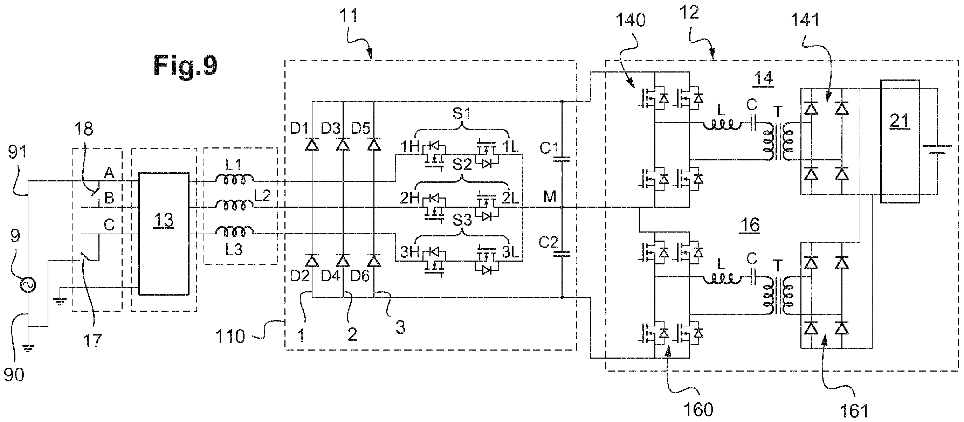

La figure 9 décrit un deuxième mode de connexion monophasée du dispositif de charge, correspondant à un deuxième niveau de puissance de charge demandé en monophasé, dit intermédiaire, de l'ordre de 15 kW. Pour ce faire, l'adaptation du dispositif de charge par rapport au mode de réalisation décrit à la figure 6, consiste à ajouter, en plus du premier relai de connexion 17, permettant de relier la connexion de phase C et le fil de neutre 90 du réseau monophasé 9, un deuxième relai de connexion 18, destiné à relier ensemble les deux connexions de phase A et B, qui sont alors reliées toutes deux au fil de phase 91 du réseau monophasé 9. Dans cette configuration, on peut conserver la même topologie de base avec les mêmes composants pour les deux bras de commutation S1 et S2 associés aux connexions de phase A et B. En effet, chacun des bras de commutation du redresseur PFC est dimensionné pour pouvoir faire passer 7 kW environ. En revanche, le troisième bras de commutation S3 associé à la connexion de phase C reliée au fil de neutre du réseau et faisant office de bras de retour, devra lui être redimensionné de façon à pouvoir faire passer la puissance transmise par les deux autres bras reliés ensemble au fil de phase du réseau, soit 14 kW environ. Les composants du bras de commutation S3 seront donc redimensionnés en conséquence.

Comme pour le premier mode de connexion monophasée permettant de délivrer 7 kW en monophasé, on peut établir deux stratégies de commande pour ce deuxième mode de connexion monophasée, à savoir une stratégie de commande où les deux convertisseurs résonant LLC 14, 16 de l'étage convertisseur 12 sont utilisés en alternance pour délivrer le deuxième niveau de puissance de charge demandé, et une stratégie où les deux convertisseurs 14, 16 sont utilisés conjointement en parallèle pour délivrer ce deuxième niveau de puissance de charge.

Suivant la première stratégie visant à utiliser les deux convertisseurs 14, 16 de manière alternée, on maintient en permanence à l'état fermé les interrupteurs 3H et 3L du bras de commutation S3 correspondant à la connexion de phase C reliée au fil de neutre du réseau monophasé, de façon à envoyer l'énergie sur un seul convertisseur résonant LLC d'une façon alternative, suivant le signe de la tension d'entrée. Toutefois, la limite de puissance pour ce mode de connexion monophasée avec les deux convertisseurs résonant LLC 14, 16 utilisés en alternance est de l'ordre de 11 kW, qui est la puissance nominale dimensionnée pour chacun des convertisseurs 14, 16. Du côté de la commande des bras de commutation S1 et S2 du redresseur PFC, on entrelace les signaux de commande de manière à limiter les fluctuations des courants (« ripples » selon la terminologie anglo-saxonne) vues par l'inductance du redresseur PFC. Autrement dit, le cycle de commutation du bras de commutation S1 est décalé en phase, par rapport au cycle de commutation du bras de commutation S2. Ainsi, pour une tension d'entrée du dispositif de charge positive, on commute les interrupteurs haut 1H et 2H des bras de commutation S1 et S2 du redresseur PFC reliés au fil de phase du réseau, avec un décalage de phase de 180°, les interrupteurs 3H et 3L du bras de commutation S3 correspondant à la connexion de phase C reliée au fil de neutre du réseau étant maintenus en permanence à l'état fermé. Pour une tension d'entrée négative, on commute les interrupteurs bas 1L et 2L des bras de commutation S1 et S2, avec un décalage de phase de 180°, les interrupteurs 3H et 3L du bras de commutation S3 étant toujours maintenus en permanence à l'état fermé.

Suivant la deuxième stratégie de commande, on envoie donc l'énergie aux deux convertisseurs résonant LLC 14, 16 de l'étage convertisseur DC-DC 12, qui sont dans ce cas utilisés en parallèle pour délivrer la deuxième puissance de charge intermédiaire.

Pour ce faire, on fait commuter systématiquement, suivant le signe du courant d'entrée, les interrupteurs des bras de commutation S1 et S2 associés aux connexions de phase A et B reliées ensemble au fil de phase du réseau monophasé et du bras de commutation S3 associé à la connexion de phase C reliée au fil de neutre du réseau monophasé 9.

Plus précisément, lors d'une alternance positive du courant d'entrée, le module 50 de contrôle de l'étage redresseur PFC 11 est adapté pour fournir des signaux de commande appropriés permettant de commander en commutation les interrupteurs haut 1H et 2H des bras de commutation S1 et S2 reliés au fil de phase du réseau 9 et l'interrupteur bas 3L du bras de commutation S3 relié au fil de neutre du réseau 9, tandis que les interrupteurs bas 1L et 2L des bras de commutation S1 et S2 et l'interrupteur haut 3H du bras de commutation S3 sont laissés en mode repos.

Lors d'une alternance négative du courant d'entrée, on commande en commutation les interrupteurs bas 1L et 2L des bras de commutation S1 et S2 reliés au fil de phase du réseau 9 et l'interrupteur haut 3H du bras de commutation S3 relié au fil de neutre du réseau 9, tandis que les interrupteurs haut 1H et 2H des bras de commutation S1 et S2 et l'interrupteur bas 3L du bras de commutation S3 sont laissés en mode repos.

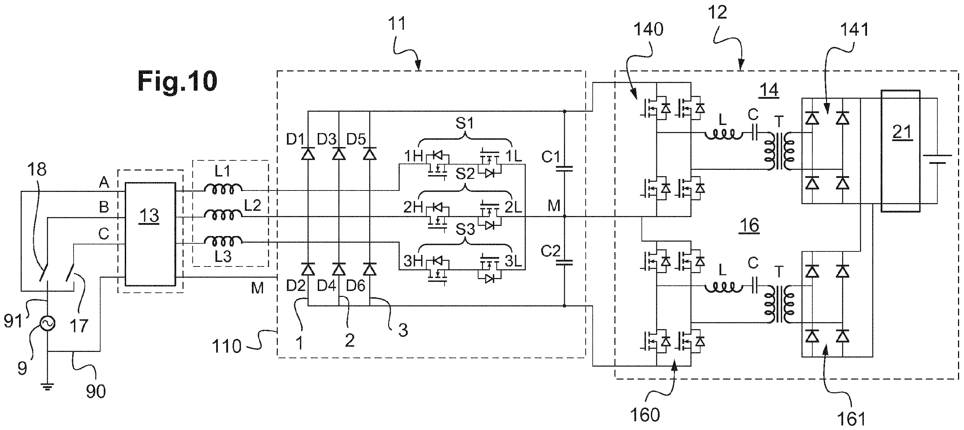

La figure 10 décrit un troisième mode de connexion monophasée du dispositif de charge, correspondant à un troisième niveau de puissance de charge demandé en monophasé, dit fort, de l'ordre de 22 kW. Dans ce troisième mode de connexion monophasée, les trois connexions de phase A, B et C du redresseur PFC sont connectées en parallèle au fil de phase 91 du réseau monophasé 9. La connexion de phase A est par exemple reliée directement au fil de phase et on ajoute deux relais de connexion 17, 18 pour relier respectivement les connexions de phase B et C du redresseur PFC au fil de phase 91. En outre, le filtre d'entrée 13 du redresseur est relié au fil de neutre 90 du réseau monophasé 9. En effet, selon ce troisième mode de connexion monophasée, le point milieu M des condensateurs de bus continu d'alimentation doit être connecté à ce fil de neutre via le filtre d'entrée 13.

Dans ce mode de connexion, le point milieu M étant raccordé au neutre, il est exclu de pouvoir envoyer l'énergie aux deux convertisseurs résonant LLC 14, 16 de l'étage convertisseur 12 en même temps. Aussi, on utilise de manière alternée les deux convertisseurs résonant LLC 14, 16 pour transmettre la puissance de charge de 22 kW à la batterie 20. Par conséquent, chacun de ces convertisseurs doit être dimensionné pour une puissance nominale de 22 kW au lieu de 11 kW pour les deux modes de connexion monophasée précédemment décrits.

Concernant la commande des bras de commutation du redresseur PFC, lors d'une alternance positive du courant d'entrée, le module 50 de contrôle de l'étage redresseur PFC 11 est adapté pour fournir des signaux de commande permettant de commander en commutation les interrupteurs haut 1H, 2H et 3H respectivement des bras de commutation S1, S2 et S3 reliés au fil de phase du réseau 9, tandis que les interrupteurs bas 1L, 2L et 3L des bras de commutation S1, S2 et S3 sont laissés en mode repos. Lors d'une alternance négative du courant d'entrée, on commande en commutation les interrupteurs bas 1L, 2L et 3L respectivement des bras de commutation S1, S2 et S3 reliés au fil de phase du réseau 9, tandis que les interrupteurs haut 1H, 2H et 3H sont laissés en mode repos. On entrelace les signaux de commande des interrupteurs, préférentiellement avec un décalage de phase de 120°, de manière à limiter les fluctuations de courant.

## Revendications

1. Procédé de commande d'un dispositif de charge d'une batterie de véhicule automobile, le dispositif de charge comprenant un étage redresseur (11) assurant une fonction de correction de facteur de puissance, comportant trois connexions de phases (A, B, C) aptes à être connectées en entrée à un réseau d'alimentation électrique monophasé (9) ou triphasé chacune par l'intermédiaire d'une bobine d'inductance en série (L1, L2, L3), et un étage convertisseur continu-continu (12) relié entre l'étage redresseur (11) et la batterie (20), l'étage redresseur étant un redresseur triphasé de Vienne (110) comprenant un pont à diodes triphasé (D1-D6) et trois bras de commutation (S1, S2, S3) intégrés au pont à diodes, comprenant chacun un montage en série d'un interrupteur haut (1H-3H) apte à être piloté quand le courant du réseau est positif et d'un interrupteur bas (1L-3L) apte à être piloté quand le courant du réseau est négatif, les bras de commutation (S1, S2, S3) étant interconnectés en un point milieu (M) auquel sont reliés un premier et un deuxième condensateurs de bus continu d'alimentation (C1, C2) en sortie de l'étage redresseur (11), l'étage convertisseur continu-continu (12) comprenant un premier et un deuxième convertisseurs résonant LLC (14, 16) connectés en entrée respectivement au premier et au deuxième condensateurs de bus continu d'alimentation par un premier et un deuxième bus continu d'alimentation (7, 8) et, en sortie, à la batterie (20), le procédé étant du type selon lequel on régule le courant en entrée du dispositif de charge au moyen du redresseur triphasé de Vienne (110), chaque bras de commutation étant piloté à l'aide de signaux de commande de modulation par largeur d'impulsion dont le rapport cyclique de commutation est déterminé en fonction de la régulation du courant en entrée, le procédé étant **caractérisé en ce qu'**on alimente le dispositif de charge en monophasé et on régule la tension (V_DC_1, V_DC2) des premier et deuxième condensateurs de bus continu d'alimentation (C1, C2) de façon indépendante au moyen des premier et deuxième convertisseurs résonant LLC (14, 16) de façon à assurer une tension régulée fixe sur chacun des bus continu d'alimentation.

2. Procédé selon la revendication 1, **caractérisé en ce que**, dans un premier mode de connexion monophasée correspondant à un premier niveau de puissance de charge en monophasé parmi au moins trois niveaux de puissance de charge de faible à élevé, on connecte une première (A) et une deuxième (C) des trois connexions de phase du dispositif de charge respectivement à un fil de phase (91) et de neutre (90) du réseau électrique monophasé, la deuxième connexion de phase étant reliée au fil de neutre par un relai de connexion (17).

3. Procédé selon la revendication 2, **caractérisé en ce qu'**on maintient en permanence à l'état fermé les interrupteurs (3H, 3L) du bras de commutation (S3) correspondant à la deuxième (C) connexion de phase du dispositif de charge reliée au fil de neutre, de façon à n'utiliser alternativement qu'un seul des deux convertisseurs résonant LLC (14, 16) pour la charge de la batterie (20) selon le premier niveau de puissance de charge, en fonction du signe du courant d'entrée.

4. Procédé selon la revendication 3, **caractérisé en ce qu'**à chaque alternance du signe du courant d'entrée, on coupe la commande du convertisseur résonant LLC non utilisé.

5. Procédé selon la revendication 2, **caractérisé en ce qu'**on fait commuter systématiquement les interrupteurs des bras de commutation (S1, S3) correspondant aux première et deuxième connexions de phase (A, C) du dispositif de charge reliées au réseau électrique monophasé (9) en fonction du signe du courant d'entrée, de façon à utiliser conjointement les deux convertisseurs résonant LLC (14, 16) pour la charge de la batterie (20) selon le premier niveau de puissance de charge.

6. Procédé selon la revendication 5, caractérisé en ce lors d'une alternance positive du courant d'entrée, on fait commuter ensemble l'interrupteur haut (1H) et l'interrupteur bas (3L) des bras de commutation (S1, S3) correspondant respectivement aux première et deuxième connexions de phase du dispositif de charge et, lors d'une alternance négative du courant d'entrée, on fait commuter ensemble l'interrupteur bas (1L) et l'interrupteur haut (3H) des bras de commutation (S1, S3) correspondant respectivement aux première et deuxième connexions de phase du dispositif de charge.

7. Procédé selon l'une quelconque des revendications précédentes, **caractérisé en ce que** dans un deuxième mode de connexion monophasée, correspondant à un deuxième niveau de puissance de charge en monophasé parmi au moins trois niveaux de puissance de charge de faible à élevé, on connecte une première (A) et une deuxième (C) des trois connexions de phase du dispositif de charge respectivement à un fil de phase et de neutre du réseau électrique monophasé, la deuxième connexion de phase (C) étant reliée au fil de neutre par un premier relai de connexion (17) et on connecte ensemble la première (A) et la troisième (B) connexion de phase par un deuxième relai de connexion (18).

8. Procédé selon la revendication 7, **caractérisé en ce qu'**on maintient à l'état systématiquement fermé les interrupteurs du bras de commutation (S3) correspondant à la deuxième connexion de phase (C) du dispositif de charge reliée au fil de neutre, et on fait commuter systématiquement les interrupteurs des bras de commutation (S1, S2) correspondant aux première (A) et troisième (B) connexions de phase du dispositif de charge reliées ensemble en fonction du signe du courant d'entrée, de façon à n'utiliser alternativement qu'un seul des deux convertisseurs résonant LLC (14, 16) pour la charge de la batterie selon le deuxième niveau de puissance de charge, en fonction du signe du courant d'entrée.

9. Procédé selon la revendication 8, caractérisé en ce lors d'une alternance positive du courant d'entrée, on fait commuter ensemble les interrupteurs haut (1H, 2H) des bras de commutation (S1, S2) correspondant respectivement aux première (A) et troisième (B) connexions de phase reliées ensemble du dispositif de charge et, lors d'une alternance négative du courant d'entrée, on fait commuter ensemble les interrupteurs bas (1L, 2L) des bras de commutation (S1, S2) correspondant respectivement aux première (A) et troisième (B) connexions de phase reliées ensemble du dispositif de charge.

10. Procédé selon la revendication 7, **caractérisé en ce qu'**on fait commuter systématiquement les interrupteurs des bras de commutation (S1, S2, S3) correspondant aux première, deuxième et troisième connexions de phase du dispositif de charge reliées au réseau électrique monophasé (9) en fonction du signe du courant d'entrée, de façon à utiliser conjointement les deux convertisseurs résonant LLC (14, 16) pour la charge de la batterie selon le deuxième niveau de puissance de charge.

11. Procédé selon l'une quelconque des revendications précédentes, **caractérisé en ce que** dans un troisième mode de connexion monophasée, correspondant à un troisième niveau de puissance de charge en monophasé parmi au moins trois niveaux de puissance de charge de faible à élevé, on connecte une première (A) des trois connexions de phase du dispositif de charge à un fil de phase (91) du réseau électrique monophasé (9) et la deuxième (C) et la troisième (B) connexions de phase du dispositif de charge audit fil de phase du réseau électrique monophasé par un relai de connexion respectif (17, 18), le point milieu (M) du redresseur triphasé de Vienne (110) étant connecté à fil de neutre (91) du réseau électrique monophasé (9).

12. Procédé selon la revendication 11, **caractérisé en ce qu'**on n'utilise alternativement qu'un seul des deux convertisseurs résonant LLC (14, 16) pour la charge de la batterie selon le troisième niveau de puissance de charge en fonction du signe du courant d'entrée et on fait commuter systématiquement les interrupteurs des bras de commutation (S1, S2, S3) correspondant aux première (A), deuxième (C) et troisième (B) connexions de phase du dispositif de charge reliées ensemble en fonction du signe du courant d'entrée.

## Patentansprüche

1. Verfahren zum Steuern einer Kraftfahrzeugbatterie-Ladevorrichtung, wobei die Ladevorrichtung eine eine Leistungsfaktor-Korrekturfunktion gewährleistende Gleichrichterstufe (11), die drei Phasenverbindungen (A, B, C) aufweist, die am Eingang mit einem einphasigen (9) oder dreiphasigen Stromversorgungsnetz verbunden sein können, jede mittels einer in Reihe geschalteten Drosselspule (L1, L2, L3), und eine Gleichstrom-Gleichstrom-Wandlerstufe (12) enthält, die zwischen der Gleichrichterstufe (11) und der Batterie (20) verbunden ist, wobei die Gleichrichterstufe ein Vienna-Dreiphasengleichrichter (110) ist, der eine dreiphasige Diodenbrücke (D1-D6) und drei in die Diodenbrücke integrierte Schaltarme (S1, S2, S3) enthält, die je eine Reihenschaltung eines hohen Schalters (1H-3H), der gesteuert werden kann, wenn der Strom des Netzes positiv ist, und eines tiefen Schalters (1L-3L) enthalten, der gesteuert werden kann, wenn der Strom des Netzes negativ ist, wobei die Schaltarme (S1, S2, S3) an einem Mittelpunkt (M) miteinander verbunden sind, mit dem ein erster und ein zweiter Versorgungs-Gleichstrombus-Kondensator (C1, C2) am Ausgang der Gleichrichterstufe (11) verbunden sind, wobei die Gleichstrom-Gleichstrom-Wandlerstufe (12) einen ersten und einen zweiten LLC-Resonanzwandler (14, 16) enthält, die am Eingang über einen ersten bzw. einen zweiten Versorgungs-Gleichstrombus (7, 8) mit dem ersten bzw. zweiten Versorgungs-Gleichstrombus-Kondensator und am Ausgang mit der Batterie (20) verbunden sind, wobei das Verfahren von der Art ist, gemäß der der Strom am Eingang der Ladevorrichtung mittels des Vienna-Dreiphasengleichrichters (110) geregelt wird, wobei jeder Schaltarm mit Hilfe von Impulsbreitenmodulation-Steuersignalen gesteuert wird, deren Schalt-Tastverhältnis abhängig von der Regelung des Stroms am Eingang bestimmt wird, wobei das Verfahren **dadurch gekennzeichnet ist, dass** die Ladevorrichtung einphasig versorgt wird, und die Spannung V_DC_1, V_DC2) der ersten und zweiten Versorgungs-Gleichstrombus-Kondensatoren (C1, C2) unabhängig mittels der ersten und zweiten LLC-Resonanzwandler (14, 16) geregelt wird, um eine feste geregelte Spannung auf jedem der Versorgungs-Gleichstrombusse zu gewährleisten.

2. Verfahren nach Anspruch 1, **dadurch gekennzeichnet, dass** in einem ersten einphasigen Verbindungsmodus entsprechend einem ersten einphasigen Ladeleistungspegel unter mindestens drei Ladeleistungspegeln von schwach bis hoch eine erste (A) und eine zweite (C) der drei Phasenverbindungen der Ladevorrichtung mit einem Phasenleiter (91) bzw. einem Nullleiter (90) des einphasigen Stromnetzes verbunden werden, während die zweite Phasenverbindung über ein Verbindungsrelais (17) mit dem Nullleiter verbunden ist.

3. Verfahren nach Anspruch 2, **dadurch gekennzeichnet, dass** die Schalter (3H, 3L) des Schaltarms (S3) entsprechend der mit dem Nullleiter verbundenen zweiten (C) Phasenverbindung der Ladevorrichtung dauernd im geschlossenen Zustand gehalten werden, um abhängig vom Vorzeichen des Eingangsstroms abwechselnd nur einen der zwei LLC-Resonanzwandler (14, 16) zum Laden der Batterie (20) gemäß dem ersten Ladeleistungspegel zu verwenden.

4. Verfahren nach Anspruch 3, **dadurch gekennzeichnet, dass** bei jedem Wechsel des Vorzeichens des Eingangsstroms die Steuerung des nicht verwendeten LLC-Resonanzwandlers abgeschaltet wird.

5. Verfahren nach Anspruch 2, **dadurch gekennzeichnet, dass** die Schalter der Schaltarme (S1, S3) entsprechend den mit dem einphasigen Stromnetz (9) verbundenen ersten und zweiten Phasenverbindungen (A, C) der Ladevorrichtung abhängig vom Vorzeichen des Eingangsstroms systematisch umgeschaltet werden, um die zwei LLC-Resonanzwandler (14, 16) gemeinsam zum Laden der Batterie (20) gemäß dem ersten Ladeleistungspegel zu verwenden.

6. Verfahren nach Anspruch 5, **dadurch gekennzeichnet, dass** bei einem positiven Wechsel des Eingangsstroms der hohe Schalter (1H) und der tiefe Schalter (3L) der Schaltarme (S1, S3) entsprechend der ersten bzw. der zweiten Phasenverbindung der Ladevorrichtung zusammen umgeschaltet werden, und bei einem negativen Wechsel des Eingangsstroms der tiefe Schalter (1L) und der hohe Schalter (3H) der Schaltarme (S1, S3) entsprechend der ersten bzw. zweiten Phasenverbindung der Ladevorrichtung zusammen umgeschaltet werden.

7. Verfahren nach einem der vorhergehenden Ansprüche, **dadurch gekennzeichnet, dass** in einem zweiten einphasigen Verbindungsmodus entsprechend einem zweiten einphasigen Ladeleistungspegel unter mindestens drei Ladeleistungspegeln von schwach bis hoch eine erste (A) und eine zweite (C) der drei Phasenverbindungen der Ladevorrichtung mit einem Phasenleiter bzw. einem Nullleiter des einphasigen Stromnetzes verbunden werden, wobei die zweite Phasenverbindung (C) durch ein erstes Verbindungsrelais (17) mit dem Nullleiter verbunden ist, und die erste (A) und die dritte (B) Phasenverbindung durch ein zweites Verbindungsrelais (18) zusammen verbunden werden.

8. Verfahren nach Anspruch 7, **dadurch gekennzeichnet, dass** die Schalter des Schaltarms (S3) entsprechend der mit dem Nullleiter verbundenen zweiten Phasenverbindung (C) der Ladevorrichtung im systematisch geschlossenen Zustand gehalten werden, und die Schalter der Schaltarme (S1, S2) abhängig vom Vorzeichen des Eingangsstroms entsprechend den zusammen verbundenen ersten (A) und dritten (B) Phasenverbindungen der Ladevorrichtung automatisch umgeschaltet werden, um abhängig vom Vorzeichen des Eingangsstroms abwechselnd nur einen der zwei LLC-Resonanzwandler (14, 16) zum Laden der Batterie gemäß dem zweiten Ladeleistungspegel zu verwenden.

9. Verfahren nach Anspruch 8, **dadurch gekennzeichnet, dass** bei einem positiven Wechsel des Eingangsstroms die hohen Schalter (1H, 2H) der Schaltarme (S1, S2) entsprechend den zusammen verbundenen ersten (A) bzw. dritten (B) Phasenverbindungen der Ladevorrichtung zusammen umgeschaltet werden, und bei einem negativen Wechsel des Eingangsstroms die tiefen Schalter (1L, 2L) der Schaltarme (S1, S2) entsprechend den zusammen verbundenen ersten (A) bzw. dritten (B) Phasenverbindungen der Ladevorrichtung zusammen umgeschaltet werden.

10. Verfahren nach Anspruch 7, **dadurch gekennzeichnet, dass** die Schalter der Schaltarme (S1, S2, S3) entsprechend den abhängig vom Vorzeichen des Eingangsstroms mit dem einphasigen Stromnetz (9) verbundenen ersten, zweiten und dritten Phasenverbindungen der Ladevorrichtung systematisch umgeschaltet werden, um die zwei LLC-Resonanzwandler (14, 16) gemeinsam zum Laden der Batterie gemäß dem zweiten Ladeleistungspegel zu verwenden.

11. Verfahren nach einem der vorhergehenden Ansprüche, **dadurch gekennzeichnet, dass** in einem dritten einphasigen Verbindungsmodus entsprechend einem dritten einphasigen Ladeleistungspegel unter mindestens drei Ladeleistungspegeln von schwach bis hoch eine erste (A) der drei Phasenverbindungen der Ladevorrichtung mit einem Phasenleiter (91) des einphasigen Stromnetzes (9) und die zweite (C) und die dritte (B) Phasenverbindung der Ladevorrichtung mit dem Phasenleiter des einphasigen Stromnetzes durch ein jeweiliges Verbindungsrelais (17, 18) verbunden werden, wobei der Mittelpunkt (M) des Vienna-Dreiphasengleichrichters (110) mit dem Nullleiter (91) des einphasigen Stromnetzes (9) verbunden ist.

12. Verfahren nach Anspruch 11, **dadurch gekennzeichnet, dass** abhängig vom Vorzeichen des Eingangsstroms abwechselnd nur einer der zwei LLC-Resonanzwandler (14, 16) zum Laden der Batterie gemäß dem dritten Ladeleistungspegel verwendet wird, und die Schalter der Schaltarme (S1, S2, S3) abhängig vom Vorzeichen des Eingangsstroms entsprechend den zusammen verbundenen ersten (A), zweiten (C) und dritten (B) Phasenverbindungen der Ladevorrichtung systematisch umgeschaltet werden.

## Claims

1. Method for controlling a device for charging a motor vehicle battery, the charging device comprising a rectifier stage (11) providing a power factor correction function, having three phase connections (A, B, C) each able to be connected at input to a single-phase electricity supply grid (9) or three-phase electricity supply grid by way of a series inductive coil (L1, L2, L3), and a DC-to-DC converter stage (12) connected between the rectifier stage (11) and the battery (20), the rectifier stage being a three-phase Vienna rectifier (110) comprising a three-phase diode bridge (D1-D6) and three switching arms (S1, S2, S3) integrated into the diode bridge, each comprising a series assembly of a high-side switch (1H-3H) able to be driven when the grid current is positive and of a low-side switch (1L-3L) able to be driven when the grid current is negative, the switching arms (S1, S2, S3) being interconnected at a centre tap (M) to which a first and a second DC supply bus capacitor (C1, C2) at the output of the rectifier stage (11) are connected, the DC-to-DC converter stage (12) comprising a first and a second LLC resonant converter (14, 16) connected at input respectively to the first and to the second DC supply bus capacitors by a first and a second DC supply bus (7, 8) and, at output, to the battery (20), the method being of the type in which the current at the input of the charging device is regulated by way of the three-phase Vienna rectifier (110), each switching arm being driven using pulse width modulation control signals the switching duty cycle of which is determined on the basis of the regulation of the current at input, the method being **characterized in that** the charging device is supplied with power in single-phase mode and the voltage (V_DC_1, V_DC2) of the first and second DC supply bus capacitors (C1, C2) is regulated independently by way of the first and second LLC resonant converters (14, 16) so as to ensure a fixed regulated voltage on each of the DC supply buses.

2. Method according to Claim 1, **characterized in that**, in a first single-phase connection mode corresponding to a first charging power level in single-phase mode from among at least three low to high charging power levels, a first (A) and a second (C) of the three phase connections of the charging device are connected respectively to a phase wire (91) and a neutral wire (90) of the single-phase electricity grid, the second phase connection being connected to the neutral wire via a connection relay (17).

3. Method according to Claim 2, **characterized in that** the switches (3H, 3L) of the switching arm (S3) corresponding to the second (C) phase connection of the charging device connected to the neutral wire are kept permanently in the closed state, so as to alternately use just one of the two LLC resonant converters (14, 16) to charge the battery (20) at the first charging power level, depending on the sign of the input current.

4. Method according to Claim 3, **characterized in that**, upon each alternation of the sign of the input current, controlling of the LLC resonant converter that is not being used is stopped.

5. Method according to Claim 2, **characterized in that** the switches of the switching arms (S1, S3) corresponding to the first and second phase connections (A, C) of the charging device that are connected to the single-phase electricity grid (9) are switched automatically depending on the sign of the input current, so as to jointly use the two LLC resonant converters (14, 16) to charge the battery (20) at the first charging power level.

6. Method according to Claim 5, **characterized in that**, upon a positive alternation of the input current, the high-side switch (1H) and the low-side switch (3L) of the switching arms (S1, S3) corresponding respectively to the first and second phase connections of the charging device are switched together and, upon a negative alternation of the input current, the low-side switch (1L) and the high-side switch (3H) of the switching arms (S1, S3) corresponding respectively to the first and second phase connections of the charging device are switched together.

7. Method according to any one of the preceding claims, **characterized in that**, in a second single-phase connection mode, corresponding to a second charging power level in single-phase mode from among at least three low to high charging power levels, a first (A) and a second (C) of the three phase connections of the charging device are connected respectively to a phase wire and a neutral wire of the single-phase electricity grid, the second phase connection (C) being connected to the neutral wire via a first connection relay (17), and the first (A) and the third (B) phase connection are connected together via a second connection relay (18).

8. Method according to Claim 7, **characterized in that** the switches of the switching arm (S3) corresponding to the second phase connection (C) of the charging device connected to the neutral wire are kept in the automatically closed state, and the switches of the switching arms (S1, S2) corresponding to the first (A) and third (B) phase connections of the charging device that are connected together are switched automatically depending on the sign of the input current so as to alternately use just one of the two LLC resonant converters (14, 16) to charge the battery at the second charging power level, depending on the sign of the input current.

9. Method according to Claim 8, **characterized in that**, upon a positive alternation of the input current, the high-side switches (1H, 2H) of the switching arms (S1, S2) corresponding respectively to the first (A) and third (B) phase connections that are connected together of the charging device are switched together and, upon a negative alternation of the input current, the low-side switches (1L, 2L) of the switching arms (S1, S2) corresponding respectively to the first (A) and third (B) phase connections that are connected together of the charging device are switched together.

10. Method according to Claim 7, **characterized in that** the switches of the switching arms (S1, S2, S3) corresponding to the first, second and third phase connections of the charging device that are connected to the single-phase electricity grid (9) are switched automatically depending on the sign of the input current, so as to jointly use the two LLC resonant converters (14, 16) to charge the battery at the second charging power level.

11. Method according to any one of the preceding claims, **characterized in that**, in a third single-phase connection mode, corresponding to a third charging power level in single-phase mode from among at least three low to high charging power levels, a first (A) of the three phase connections of the charging device is connected to a phase wire (91) of the single-phase electricity grid (9) and the second (C) and the third (B) phase connections of the charging device are connected to said phase wire of the single-phase electricity grid via a respective connection relay (17, 18), the centre tap (M) of the three-phase Vienna rectifier (110) being connected to the neutral wire (91) of the single-phase electricity grid (9) .

12. Method according to Claim 11, **characterized in that** just one of the two LLC resonant converters (14, 16) is used alternately to charge the battery at the third charging power level depending on the sign of the input current, and the switches of the switching arms (S1, S2, S3) corresponding to the first (A), second (C) and third (B) phase connections of the charging device that are connected together are switched automatically depending on the sign of the input current.
